# EUROPEAN PATENT APPLICATION

(11) **EP 4 826 111 A1**
(43) Date of publication of application: **21.10.2026**
(21) Application number: 24904447.0
(22) Date of filing: 13.12.2024
(51) Int. Cl.: C23C 2/06, C23C 2/20, C23C 2/00, C22C 38/38, C22C 38/26, C22C 38/28

(54) **PLATED STEEL SHEET AND METHOD FOR MANUFACTURING SAME**

(30) Priority: 15.12.2023 KR 20230183122
(71) Applicant: POSCO Co., Ltd, Gyeongsangbuk-do 37859 (KR)
(72) Inventor: KIM, Tae-Chul, Gwangyang-si, Jeollanam-do 57807 (KR); YOO, Bong-Hwan, Gwangyang-si, Jeollanam-do 57807 (KR); KIM, Sung-Joo, Pohang-si, Gyeongsangbuk-do 37877 (KR); SO, Seul-Gi, Pohang-si, Gyeongsangbuk-do 37877 (KR); KIM, Myung-Soo, Pohang-si, Gyeongsangbuk-do 37877 (KR)
(74) Representative: Meissner Bolte Partnerschaft mbB
(86) International application number: PCT/KR2024/096964
(87) International publication number: WO 2025/127883

(57) **Abstract**

One aspect of the present invention provides a Zn-Mg-Al-based zinc alloy plated steel sheet having excellent surface appearance and excellent anti-glare properties, and a method for manufacturing same.

## Description

### Technical Field

The present disclosure relates to a plated steel sheet and a method for manufacturing the same. More specifically, the present disclosure relates to a Zn-Mg-Al-based zinc alloy plated steel sheet having excellent surface appearance and anti-glare properties.

### Background Art

A zinc-based plated steel sheet has a sacrificial characteristic in which when it is exposed to a corrosive environment, zinc having a lower oxidation-reduction potential than iron corrodes first to suppress corrosion of a steel plate. In addition, as zinc in a plating layer is oxidized, a dense corrosion product is formed on the surface of a steel material to block the steel material from an oxidation atmosphere, thereby improving corrosion resistance of the steel material. Due to the favorable properties as such, the scope of application of the zinc-based plated steel sheet has been recently expanded to steel sheets for construction materials, home appliances, and automobiles.

However, due to an increase in air pollution caused by industrial advancement, a corrosive environment gradually occurs, and due to strict regulations of resource and energy conservation, there is a growing need for development of a steel material having better corrosion resistance than conventional galvanized steel materials.

In order to solve the problem, various studies for a manufacturing technology of a zinc alloy-based plated steel sheet, which improves corrosion resistance of a steel material by adding elements such as aluminum (Al) and magnesium (Mg) to a zinc plating bath, have been conducted. As a representative example, there is a Zn-Mg-Al-based zinc alloy plated steel sheet to which Mg is further added to a Zn-Al plating composition system.

However, in the case of the Zn-Mg-Al-based zinc alloy plated steel sheet, the surface of a plating bath is prone to oxidation due to a high content of Mg and Al components, and due to Mg and Al-based oxides adhering to the surface of the steel material, surface quality deteriorates.

Besides, the Zn-Mg-Al-based zinc alloy plated steel sheet containing a large amount of Mg and Al has excellent corrosion resistance, but when it is applied to road sound barriers, guardrails, and the like which are infrastructures, there may be glare, which may be a factor obstructing a driver's view.

Therefore, recently, there has been a demand for technical development which may meet a demand for a Zn-Mg-Al-based galvanized steel sheet which has excellent surface appearance and anti-glare properties as well as corrosion resistance.

### [Related Art Document]

### [Patent Document]

(Patent Document 1) Korean Patent Laid-Open No. 2010-0073819

### Summary of Invention

### Technical Problem

An aspect of the present disclosure is to provide a plated steel sheet having excellent surface appearance and anti-glare properties, and a method for manufacturing the same.

An object of the present disclosure is not limited to the above description. Any person with ordinary skill in the art to which the present disclosure pertains will have no difficulty in understanding further objects of the present disclosure from the general description the present specification.

### Solution to Problem

According to an aspect of the present disclosure, a plated steel sheet includes: a base steel sheet; and a Zn-Mg-Al-based plating layer provided on at least one surface of the base steel sheet, wherein the plating layer includes, by weight: 4.0 to 6.3% of Mg, 11.0 to 19.5% of Al, a remainder of Zn, and other unavoidable impurities, and a surface of the plated steel sheet satisfies an average roughness Ra of 2.0 to 3.0 µm, a peak count RPc of 25 to 60 (1/10 mm), and a skewness Rsk of -0.5 to 0.5.

The plated steel sheet described above may have a surface glossiness B of 25 or more and 60 or less and a surface whiteness L of 85 or more.

The base steel sheet described above may include, by weight: more than 0% and 0.18% or less of C, more than 0% and 1.5% or less of Si, 0.010 to 2.7% of Mn, more than 0% and 0.0700% or less of P, more than 0% and 0.0150% or less of S, more than 0% and 0.50% or less of Al, more than 0% and 0.060% or less of Nb, more than 0% and 1.1% or less of Cr, more than 0% and 0.060% or less of Ti, and more than 0% and 0.03000% or less of B, with a remainder of Fe and other unavoidable impurities.

The Zn-Mg-Al-based plating layer described above may further include, by weight: one or more selected from 0.2% or less (including 0%) of Si and 0.2% or less (including 0%) of Ca.

The Zn-Mg-Al-based plating layer described above may further include any one or more of the following groups (a) to (h):
(a) 0.5% or less Ni,
(b) one or more of 0.1% or less of La, 0.1% or less of Ce, 0.1% or less of Y, and 1.0% or less of Sr,
(c) 0.1% or less of Ti,
(d) 0.5% or less of W,
(e) 2.0% or less of Cu,
(f) one or more of 0.5% or less of Cr, 0.5% or less of Mn, and 0.5% or less of V,
(g) one or more of 0.1% or less of B and 0.1% or less of P,
(h) one or more of 1.0% or less of Sn, 1.0% or less of Sb, and 1.0% or less of Bi.

The Zn-Mg-Al-based plating layer described above may have a thickness of 5 to 100 µm.

According to another aspect of the present disclosure, a method for manufacturing a plated steel sheet includes: preparing a base steel sheet; dipping the base steel sheet into a hot-dip galvanizing bath to obtain a hot-dip galvanized steel sheet; and supplying a mixed gas including inert gas and air to the hot-dip galvanized steel sheet and performing wiping, wherein the air is included at 5 vol% or more and 20 vol% or less with respect to the total volume of the mixed gas, the hot-dip galvanizing bath includes, by weight: 4.0 to 6.3% of Mg, 11.0 to 19.5% of Al, a remainder of Zn, and other unavoidable impurities, and an entering temperature A of the base steel sheet in the obtaining of a hot-dip galvanized steel sheet satisfies the following Relation 1:
[Relation 1]: $\left({T}_{B}-40\right) ° C \leq A \leq \left({T}_{B}-10\right) ° C$
wherein T_{B} is a temperature (°C) of the galvanizing bath.

The base steel sheet described above may include, by weight: more than 0% and 0.18% or less of C, more than 0% and 1.5% or less of Si, 0.010 to 2.7% of Mn, more than 0% and 0.0700% or less of P, more than 0% and 0.0150% or less of S, more than 0% and 0.50% or less of Al, more than 0% and 0.060% or less of Nb, more than 0% and 1.1% or less of Cr, more than 0% and 0.060% or less of Ti, and more than 0% and 0.03000% or less of B, with a remainder of Fe and other unavoidable impurities.

The hot-dip galvanizing bath described above may further include, by weight: one or more selected from 0.2% or less (including 0%) of Si and 0.2% or less (including 0%) of Ca.

The hot-dip galvanizing bath described above may further include any one or more of the following groups (a) to (h):
(a) 0.5% or less of Ni,
(b) one or more of 0.1% or less of La, 0.1% or less of Ce, 0.1% or less of Y, and 1.0% or less of Sr.
(c) 0.1% or less of Ti,
(d) 0.5% or less of W,
(e) 2.0% or less of Cu,
(f) one or more of 0.5% or less of Cr, 0.5% or less of Mn, and 0.5% or less of V,
(g) one or more of 0.1% or less of B and 0.1% or less of P,
(h) one or more of 1.0% or less of Sn, 1.0% or less of Sb, and 1.0% or less of Bi.

The galvanizing bath described above may have a temperature T_{B} of 440°C or higher and 500°C or lower.

The inert gas described above may include any one or more of argon gas and nitrogen gas.

### Advantageous Effects of Invention

According to an aspect of the present disclosure, a plated steel sheet having excellent surface appearance and anti-glare properties, and a method for manufacturing the same may be provided.

Various and beneficial merits and effects of the present disclosure are not limited to the descriptions above, and may be more easily understood in a process of describing specific exemplary embodiments in the present disclosure.

### Brief Description of Drawings

FIG. 1 is image photographs showing surfaces of (a) Inventive Example 4 and (b) Comparative Example 4, respectively.
FIG. 2 shows comparison and evaluation of surface shape characteristics of (a) Inventive Example 4 and (b) Comparative Example 4, respectively.

### Best Mode for Invention

Hereinafter, the preferred example embodiments in the present disclosure will now be described in detail. However, the example embodiments in the present disclosure may be modified in many different forms, and the scope of the present disclosure is not limited to the example embodiments set forth herein.

In the present specification, the term "comprising" is used to indicate further inclusion of other constituent elements rather than exclusion of other constituent elements, unless otherwise particularly stated.

In addition, unless otherwise defined in the specification of the present disclosure, % unit refers to wt%.

In the conventional technology related to the Zn-Mg-Al-based zinc alloy plated steel sheet, Mg was added for improving corrosion resistance, but when Mg is excessively added, occurrence of plating bath floating dross is increased, the dross should be often removed, and thus, the upper limit of an amount of Mg added is limited to 3.0%.

Thus, a study was conducted in order to further improve corrosion resistance by increasing the amount of Mg added to more than 3.0%, but as the amounts of Mg and Al added are increased, surface quality was not secured due to adhesion of dross and the like.

In addition to the problem of surface quality as such, when the amounts of Mg and Al added are increased as described above, gloss of the plated steel sheet is high, and when the steel sheet is applied to road facilities such as sound barriers and guardrails, which are infrastructures, glare is not prevented.

Therefore, in the conventional technology it was technically difficult to provide a plated steel sheet having excellent surface appearance and having anti-glare properties through gloss reduction simultaneously with securing corrosion resistance.

Thus, the present inventors made a close study in order to solve the problems described above, and as a result, found that it is important to secure the surface roughness characteristic value of the plated steel sheet as well as the composition of the plating layer.

Further, the present inventors found that it is effective to control an entering temperature of a base steel sheet during hot-dip galvanizing and the composition of a mixed gas supplied in the hot-dip galvanizing wiping step to appropriate levels, as one method for securing the characteristics described above,

The plated steel sheet of the present disclosure obtained according to the above description has excellent surface quality and anti-glare properties by having appropriate levels of surface glossiness and surface whiteness.

In this regard, a plated steel sheet according to an example embodiment in the present disclosure may include: a base steel sheet; and a Zn-Mg-Al-based plating layer provided on at least one surface of the base steel sheet, wherein the plating layer includes, by weight: 4.0 to 6.3% of Mg, 11.0 to 19.5% of Al, a remainder of Zn, and other unavoidable impurities, and a surface of the plated steel sheet may satisfy an average roughness Ra of 2.0 to 3.0 µm, a peak count RPc of 25 to 60 (1/10 mm), and a skewness Rsk of -0.5 to 0.5. Hereinafter, each component will be described in detail.

First, the plated steel sheet according to an example of the present disclosure includes: a base steel sheet; and a Zn-Mg-Al-based plating layer provided on at least one surface of the base steel sheet.

In the present disclosure, the type of base steel sheet may not be particularly limited. For example, the base steel sheet may be a Fe-based base steel sheet which is used as the base steel sheet of a commonly applied zinc-based plated steel sheet, that is, a hot rolled steel sheet or a cold rolled steel sheet, but is not limited thereto. Otherwise, the base steel sheet may be, for example, a carbon steel, an ultra-low carbon steel, or a high manganese steel, which is used as, for example, materials for construction, home appliances, and automobiles.

However, as an example, the base steel sheet may have a composition including, by weight: more than 0% and 0.18% or less of C, more than 0% and 1.5% or less of Si, 0.010 to 2.7% of Mn, more than 0% and 0.0700% or less of P, more than 0% and 0.0150% or less of S, more than 0% and 0.50% or less of Al, more than 0% and 0.060% or less of Nb, more than 0% and 1.1% or less of Cr, more than 0% and 0.060% or less of Ti, and more than 0% and 0.03000% or less of B, with a remainder of Fe and other unavoidable impurities.

Though is not particularly limited, according to an example embodiment in the present invention, a Zn-Mg-Al-based plating layer formed of a Zn-Mg-Al-based alloy may be provided on at least one surface of the base steel sheet. The plating layer may be formed on only one surface of the base steel sheet or both surfaces of the base steel sheet. Herein, the Zn-Mg-Al-based plating layer refers to a plating layer which includes Mg and Al and mainly includes Zn (that is, including 50% or more of Zn).

Though it not particularly limited, according to an example embodiment in the present invention, the Zn-Mg-Al-based plating layer may have a thickness of 5 to 100 µm, more preferably 7 to 90 µm. When the thickness of the plating layer is less than 5 µm, the plating layer may become excessively thin locally due to an error resulting from a thickness deviation of the plating layer, and corrosion resistance may be deteriorated. When the thickness of the plating layer is more than 100 µm, cooling of the hot-dip plating layer may be delayed, and as an example, solidification defects such as a flow pattern may occur on the surface of the plating layer. In addition, a time required to solidify the plating layer is increased to reduce productivity of a steel sheet.

In addition, according to the present disclosure, the Zn-Mg-Al-based plating layer may include, by weight: 4.0 to 6.3% of Mg, 11.0 to 19.5% of Al, a remainder of Zn, and other unavoidable impurities. In addition, though is not particularly limited, the plating layer may optionally further include, by weight: one or more of 0.20% or less (including 0%) of Si and 0.200% or less (including 0%) of Ca. Hereinafter, the reason for adding each component and the reason for limiting the content will be described in detail.

### Mg: 4.0 to 6.3%

Mg is an element which plays a role in improving corrosion resistance of a plated steel sheet, and in the present disclosure, an Mg content in the plating layer is controlled to 4.0% or more for securing excellent corrosion resistance to be desired. Meanwhile, when Mg is excessively added, dross may occur, and thus, the Mg content may be controlled to 6.3% or less. As another example, Mg may be included at 4.5 to 6.0 wt%, and as another example, may be included at 5.0 to 5.5 wt%.

### Al: 11.0 to 19.5%

In general, when Mg is added at 1.0% or more, an effect of improving corrosion resistance is exhibited, but when Mg is added at 2.0% or more, a plating bath floating dross occurrence by oxidation of Mg in the plating bath is increased, so that the dross should be removed often.

Due to the problem, in the conventional technology, Mg is added at 1.0% or more to secure corrosion resistance, while the upper limit of the Mg content is set to 3.0%, in Zn-Mg-Al-based zinc alloy plating.

However, in order to further improve the corrosion resistance, the Mg content needs to increase to 4.0% or more, but when Mg is included at 4.0% or more in the plating layer, dross by Mg oxidation in the plating bath may occur, and thus, in order to suppress dross occurrence as such, Al may be added at 11.0% or more to the Zn-Mg-Al-based plating layer according to an example of the present disclosure.

However, when Al is excessively added for dross suppression, a melting point of the plating bath is raised and an operating temperature accordingly becomes too high, resulting in a problem by high temperature operation, such as erosion of a plating bath structure and deformation of a steel material. Besides, when an Al content in the plating bath is excessive, Al reacts with Fe in the base steel sheet and does not contribute to the formation of a Fe-Al suppression layer, and a reaction of Al and Zn rapidly occurs to excessively form an outburst phase in a lump shape to rather deteriorate corrosion resistance. Therefore, it is preferred that the upper limit of the Al content in the plating layer is controlled to 19.5%. As another example, Al may be included at 13.0 to 17.5 wt%, and as another example, may be included at 14.0 to 16.0 wt%.

### Si: 0.20% or less (including 0%)

When Si is added at 0.20% or less, production of a thick Fe-Al-based alloy layer in the interface between base iron and the plating layer may be prevented to prevent a decrease in strength of the interface between the plating layer and base iron. Therefore, it is favorable to add it, but even if not added, corrosion resistance is hardly affected in the present disclosure, the lower limit is 0%.

However, even when an Si content is more than 0.20%, the effect of suppressing a Fe-Al-based alloy layer on the interface is saturated, and as the amount of Si added increases, the melting point of the plating bath rises, and thus, the temperature of the plating bath should be maintained high, which is not preferred in terms of facility protection. According to an example embodiment of the present disclosure, it may be 0.18% or less.

### Ca: 0.200% or less (including 0%)

Ca is not necessarily added, but when it is added up to 0.200%, production of a MgO oxide in the plating bath may be suppressed. In addition, since it may be added in a small amount for operation convenience during manufacture of an ingot for manufacturing a plating bath, it may be present in a small amount in the plating bath manufactured from the ingot. However, an amount of Ca added is more than 0.200%, the color of a steel sheet may darken, which is not preferred. According to an example embodiment in the present disclosure, it may be 0.180% or less.

### Remainder of Zn and other unavoidable impurities

In addition to the components described above, components eluted in the process of ingot manufacture or from the steel sheet include unavoidable impurities and a zinc component present in the plating bath. The unavoidable impurities include Sb, Sn, Pb, Sr, Cu, and the like which are components which are inevitably introduced in a small amount during manufacture of an ingot for plating bath solution manufacture. Meanwhile, components which are present in a small amount in the plating bath by inevitable elution by the dipping of the steel sheet into the plating bath may include Mn, Ti, Ni, B, Nb, and the like, but additionally, other components may exist depending on the components of the steel sheet. However, even when they are added inevitably, it is not preferred that the amount of each component added is 0.010% or more.

According to an example embodiment in the present disclosure, the plating layer may further include any one or more of the following groups (a) to (h).

However, since the elements of each group are not essential elements for achieving the object of the present disclosure, the lower limit of the contents are not limited. Therefore, though is not particularly described below, the lower limit of the content of each element may be 0%:
(a) 0.5% or less of Ni,
(b) one or more of 0.1% or less of La, 0.1% or less of Ce, 0.1% or less of Y, and 1.0% or less of Sr
(c) 0.1% or less of Ti,
(d) 0.5% or less of W,
(e) 2.0% or less of Cu,
(f) one or more of 0.5% or less of Cr, 0.5% or less of Mn, and 0.5% or less of V,
(g) one or more of 0.1% or less of B and 0.1% or less of P,
(h) one or more of 1.0% or less of Sn, 1.0% or less of Sb, and 1.0% or less of Bi.

Hereinafter, the reason for adding each component and the reason for limiting the content will be described in detail.

### (a) Ni: 0.5% or less

Ni has an effect of preventing Fe diffusion by production of an Al-Ni alloy phase, but when the content is more than 0.5%, the cost of auxiliary materials may rise excessively.

### (b) One or more of La: 0.1% or less, Ce: 0.1% or less, Y: 0.1% or less, and Sr: 1.0% or less

La, Ce, Y, and Sr have an effect of preventing Mg oxidation in the plating bath by formation of an oxide film, but when the contents are more than 0.1%, 0.1%, 0.1%, and 1.0%, respectively, platability may be deteriorated due to the increased viscosity of the plating bath.

### (c) Ti: 0.1% or less

Ti has a crystal grain (spangle) refinement effect since a Ti-Al intermetallic compound acts as a nucleation site, but when the content is more than 0.1%, a plating bath melting point is increased, and a dross increase problem arise.

### (d) W: 0.5% or less

W forms a W oxide on the surface and has a corrosion resistance improvement effect, but when the content is more than 0.5%, the plating bath melting point is increased.

### (e) Cu: 2.0% or less

Cu has an effect of lowering plating layer hardness since an Al-Cu eutectic structure is formed, but when the content is more than 2.0%, spangle may be coarsened.

### (f) One or more of Cr: 0.5% or less, Mn: 0.5% or less, and V: 0.5% or less

Since Cr, Mn, and V have rapid liquid loss, they have an effect of preventing electrode deterioration by suppressing alloying of zinc and a welding electrode, but when the content is more than 0.5%, the plating bath melting point may be excessively increased.

### (g) One or more of B: 0.1% or less and P: 0.1% or less

B and P have an effect of suppressing weld LME cracks, but when the contents are more than 0.1%, respectively, dross occurrence may be increased.

### (h) One or more of Sn: 1.0% or less, Sb: 1.0% or less, and Bi: 1.0% or less

Sn, Sb, and Bi have an effect of uniformizing spangles and improving pot durability due to plating bath temperature lowering, but when the contents are more than 1.0%, respectively, the spangles may be coarsened.

Meanwhile, the surface of the plated steel sheet according to another example embodiment in the present disclosure may satisfy an average surface roughness Ra: 2.0 to 3.0 µm, a peak count RPc: 25 to 60 (1/10 mm), and a skewness Rsk: -0.5 to 0.5.

### Average surface roughness Ra: 2.0 to 3.0 µm

In an example of the present disclosure, in order to secure surface quality having no gloss and showing a luxurious white color, the average surface roughness may be 2.0 µm or more. That is, when the average surface roughness is less than 2.0 µm, a glare problem may arise by inducing light reflection due to the presence of flat portions. However, when the average surface roughness is more than 3.0 µm, surface roughness is severe, and subsequent working processes such as bending and roll forming may be adversely affected. As another example, the average surface roughness may be 2.3 to 2.8 µm, and as another example, it may be 2.5 to 2.6 µm.

### Peak count RPc: 25 to 60 (1/10 mm)

Throughout the present specification, the peak count refers to the number of peaks present on the surface of the plated steel sheet per unit cm. That is, the peak count may be used as an indicator showing an unevenness degree of the plated steel sheet surface. When the peak count is less than 25 (1/10 mm), surface curvature is reflected and glare properties may be adversely affected. When the peak count is more than 60 (1/10 mm), the grooves on the surface are excessively dense to cause slipping during working. As another example, the peak count may be 35 to 50 (1/10 mm) or 40 to 45 (1/10 mm).

### Skewness Rsk: -0.5 or more and 0.5 or less

Throughout the present specification, the skewness Rsk value may refer to a degree of oil contained in the plating layer, and the skewness Rsk value may affect the working properties of the plated steel sheet. When the skewness value is less than -0.5, it is difficult to uniformly maintain oil such as anti-rust oil or lubricating oil in the width direction of the steel sheet, and then a localized degreasing characteristic may not be good in a process such as degreasing. However, when the skewness value is more than 0.5, there are many peaks in a probe shape protruding upward from the surface shape, and the surface shape during working may be distorted. As another example, the skewness value of the plated steel sheet surface may be -0.3 to 0.3 or -0.1 to 0.1.

Meanwhile, according to an example embodiment in the present disclosure, the plated steel sheet may secure excellent surface appearance and anti-glare properties to the desired level, simultaneously with securing corrosion resistance. More specifically, the plated steel sheet according to an example of the present disclosure may have a surface glossiness B of 25 or more and 60 or less and a surface whiteness L of 85 or more.

### Surface glossiness B: 25 or more and 60 or less

In order to prevent a problem in which the color of the plated steel sheet looks dark due to the excessively low gloss, an example of the present disclosure may have the lower limit of the surface glossiness of 25 or more. However, when the surface glossiness is more than 60, there is a possibility that a flash in the driver's vision may be caused when applied to road guardrails, and thus, in an example embodiment in the present disclosure, the surface glossiness may be 60 or less. That is, the plated steel sheet according to an example of the present disclosure may secure a desired level of glossiness while preventing glare by setting the surface glossiness of 25 or more and 60 or less. Herein, though is not necessarily limited thereto, as an example, the surface glossiness B may be measured by REF-260 available from SHEEN, and the incident angle in the measurement may be 60°. According to another example, the surface glossiness may be 35 or more and 55 or less, and as another example, 40 or more and 50 or less.

### Whiteness L: 85 or more

A non-limiting example embodiment in the present disclosure may have the whiteness of 85 or more for the purpose of securing aesthetics of surface quality appearance. As the whiteness is higher, it is more favorable for achieving the object of the present disclosure, the upper limit of the whiteness is not separately defined in an example of the present disclosure. However, considering that time and effort are excessively required in a substantial process for implementing the whiteness of more than 95, the upper limit of the whiteness may be 95 in a non-limiting example of the present disclosure. Herein, though is not necessarily limited thereto, as an example, the whiteness may be measured with CM-3700A available from Minolta, and in this case, the whiteness may occur in a range of 0 to 100. According to another example, the whiteness may be 90 or more, and as another example, it may be 94 or more.

Next, a [method for manufacturing a plated steel sheet] according to another aspect of the present disclosure will be described in detail. However, it does not mean that the plated steel sheet of the present disclosure should be necessarily manufactured by the following manufacturing method.

According to an example embodiment in the present disclosure, first, preparing a base steel sheet may be included, and the type of base steel sheet is not particularly limited. The base steel sheet may be a Fe-based base steel sheet used as the base steel sheet of a common hot-dip galvanized steel sheet, that is, a hot rolled steel sheet or a cold rolled steel sheet, but is not limited thereto. In addition, the base steel sheet may be a carbon steel, an ultra-low carbon steel, or high-manganese steel used as, for example, materials for construction, home appliance, and automobiles, but is not limited thereto. Herein, the above description may be identically applied to the base steel sheet.

Then, the base steel sheet prepared as described above may be dipped into a hot-dip galvanizing bath including, by weight: 4.0 to 6.3% of Mg, 11.0 to 19.5% of Al, a remainder of Zn, and other unavoidable impurities to obtain a hot-dip galvanized steel sheet. Herein, the above description of the components of the plating layer may be identically applied to the reason for adding the components to the plating bath described above and the reason for limiting the contents, except the content of the small amount of impurities which may be introduced from the base steel sheet. Therefore, according to an aspect of the present disclosure, the plating bath may optionally further include, by weight, one or more selected from 0.20% or less (including 0%) of Si and 0.200% or less (including 0%) of Ca.

Herein, the above description of the components of the plating layer may be identically applied to the reason for adding the components to the plating bath described above and the reason for limiting the contents, except the content of the small amount of Fe which may be introduced from the base steel sheet.

Meanwhile, in order to prepare the plating bath having a composition described above, a composite ingot containing predetermined Zn, Al, and Mg, or a Zn-Mg or Zn-Al ingot containing separate components may be used. In order to supplement the plating bath consumed by the hot-dip plating, the ingot is further dissolved and supplied. In this case, a method of depositing the ingot directly in the plating bath and dissolving may be adopted, or a method of dissolving the ingot in a separate pot and then supplementing molten metal in a plating bath may be adopted.

In addition, according to a non-limiting example of the present disclosure, an entering temperature A of the base steel sheet when obtaining the hot-dip galvanized steel sheet may satisfy the following Relation 1:
[Relation 1]: $\left({T}_{B}-40\right) ° C \leq A \leq \left({T}_{B}-10\right) ° C$
wherein T_{B} is a temperature (°C) of the galvanizing bath.

That is, when the entering temperature A of the base steel sheet derived by Relation 1 is lower than T_{B}-40°C, the crystal phase may not dense, and when the entering temperature A of the base steel sheet is higher than T_{B}-10°C, plating adhesion has a problem. As another example, the entering temperature A of the base steel sheet may be (T_{B}-30)°C to (T_{B}-10)°C, and as another example, may be (T_{B}-20)°C to (T_{B}-10)°C.

Herein, though is not particularly defined, as an example, the plating bath temperature (T_{B}) described above may be in a range of 440 to 500°C. Meanwhile, more preferably, the lower limit of the plating bath temperature (T_{B}) may be 455°C, or the upper limit of the plating bath temperature (T_{B}) may be 490°C.

Subsequently, the method for manufacturing a plated steel sheet according to a non-limiting example of the present disclosure may include supplying a mixed gas including inert gas and air to the hot-dip galvanized steel sheet and performing wiping.

In addition, according to the method for manufacturing a plated steel sheet by an example embodiment in the present disclosure, the air may be included at 5 vol% or more and 20 vol% or less, based on the total volume of the mixed gas.

That is, the present inventors made a close study, and as a result, found that when mixing 5 vol% or more and 20 vol% or less of air with inert gas and performing wiping, unlike a common method, the surface of the plated steel sheet may show excellent milky whiteness through weak oxidation, and anti-glare properties became excellent due to disappear of gloss.

In the case in which the content of air is less than 5 vol% based on the total fraction of the mixed gas, the weak oxidation effect described above may be insignificant, and as a result, it may be difficult to improve the whiteness of the steel sheet. However, when the content of air is more than 20 vol% based on the total fraction of the mixed gas, severe over-oxidation defects may be caused on the surface of the steel sheet. Therefore, in a non-limiting example of the present disclosure, the content of air included in the mixed gas may be maintained at 5 to 20 vol%. As another example, the content of air included in the mixed gas may be 5 to 15 vol%, and as still another example, it may be 5 to 10 vol%.

Meanwhile, though is not particularly limited, according to an example embodiment in the present disclosure, the inert gas may be an argon (Ar) gas, a nitrogen (N₂) gas, or a mixed gas of argon and nitrogen, but in terms of economic feasibility, it is more preferred to use a nitrogen gas.

Hereinafter, the present disclosure will be specifically described through the following Examples. However, it should be noted that the following Examples are only for describing the present disclosure in detail by illustration, and are not intended to limit the right scope of the present disclosure. The reason is that the right scope of the present disclosure is determined by the matters described in the claims and reasonably inferred therefrom. Mode for Invention

### (Examples)

A base steel sheet having a composition of: 0.018% of C, 0.010% of Si, 0.20% of Mn, 0.009% of P, 0.005% of S, 0.1% of Al, 0.02% of Nb, 0.20% of Cr, 0.020% of Ti, 0.015% of B, a remainder of Fe, and impurities, and having a thickness of 1.5 mm and a width of 1200 mm was prepared. The base steel sheet was dipped into a hot-dip galvanizing bath under the conditions of Table 1 to obtain a hot-dip galvanized steel sheet. A small amount of Fe having a potential for being introduced from the base steel sheet was excluded from the composition of the hot-dip galvanizing bath of the following Table 1.

Subsequently, a mixed gas of nitrogen (N₂) gas and air was used to perform a wiping treatment. At this time, an air content in the mixed gas is as shown in the following Table 1. Next, the surface glossiness, the whiteness, the surface roughness, the number of surface peaks, and the skewness of the manufactured plated steel sheet were measured, and the measured values are shown in the following Table 2. The thickness of the Zn-Mg-Al-based plating layer of the manufactured plated steel sheet was 5 to 100 µm.

At this time, the surface glossiness B was measured with REF-260 available from SHEEN, and the measured surface glossiness was a glossiness at an incident angle of 60°.

In addition, the lightness (L) value in the whiteness was measured with CM-3700A available from Minolta.

The surface roughness, the number of surface peaks, and the skewness Rsk were measured in accordance with JIS 2013, using a contact-type surface roughness tester product from KOSAKA.

**[Table 1]**

| No. | Plating conditions | | | | | Wiping gas |
|---|---|---|---|---|---|---|
| | Plating bath composition [wt%] | | | Plating bath temperat ure [°C] | Base iron entering temperat ure [°C] | Air content in mixed gas [vol%] |
| | Mg | Al | Others | | | |
| Inventive Example 1 | 4.0 | 11.0 | Remainder of Zn | 440 | 430 | 5 |
| Inventive Example 2 | 4.4 | 11.4 | Remainder of Zn | 450 | 440 | 6 |
| Inventive Example 3 | 4.9 | 12.2 | Remainder of Zn | 455 | 445 | 8 |
| Inventive Example 4 | 5.4 | 14.4 | Remainder of Zn | 460 | 450 | 9 |
| Inventive Example 5 | 5.7 | 17.5 | Remainder of Zn | 475 | 465 | 11 |
| Inventive Example 6 | 6.1 | 19.2 | Remainder of Zn | 490 | 470 | 12 |
| Inventive Example 7 | 4.6 | 11.6 | Remainder of Zn | 460 | 440 | 14 |
| Inventive Example 8 | 5.1 | 12.3 | Remainder of Zn | 455 | 425 | 17 |
| Inventive Example 9 | 6.3 | 19.5 | Remainder of Zn | 490 | 450 | 20 |
| Comparative Example 1 | 3.8 | 9.1 | Remainder of Zn | 440 | 440 | 0 |
| Comparative Example 2 | 6.4 | 10.2 | Remainder of Zn | 450 | 450 | 1 |
| Comparative Example 3 | 5.7 | 7.9 | Remainder of Zn | 470 | 470 | 2 |
| Comparative Example 4 | 7.1 | 14.4 | Remainder of Zn | 490 | 490 | 3 |
| Comparative Example 5 | 3.7 | 8.9 | Remainder of Zn | 440 | 450 | 4 |
| Comparative Example 6 | 6.3 | 10.2 | Remainder of Zn | 450 | 460 | 7 |
| Comparative Example 7 | 5.6 | 7.9 | Remainder of Zn | 470 | 460 | 9 |
| Comparative Example 8 | 7.2 | 20.0 | Remainder of Zn | 490 | 470 | 10 |
| Comparative Example 9 | 7.6 | 19.1 | Remainder of Zn | 490 | 480 | 13 |
| Comparative Example 10 | 4.3 | 8.0 | Remainder of Zn | 470 | 450 | 15 |
| Comparative Example 11 | 4.8 | 6.5 | Remainder of Zn | 460 | 430 | 8 |
| Comparative Example 12 | 6.7 | 10.8 | Remainder of Zn | 470 | 450 | 14 |
| Comparative Example 13 | 7.8 | 21.0 | Remainder of Zn | 510 | 510 | 21 (occurrence of many defects) |
| Comparative Example 14 | 6.5 | 10.7 | Remainder of Zn | 460 | 470 | 25 (occurrence of many defects) |
| Comparative Example 15 | 6.9 | 7.8 | Remainder of Zn | 490 | 490 | 27 (occurrence of many defects) |
| Comparative Example 16 | 4.9 | 12.5 | Remainder of Zn | 500 | 520 | 15 |

**[Table 2]**

| No. | Surface glossiness B | Whiteness L | Surface roughness | Number of surface peaks | Skewness |
|---|---|---|---|---|---|
| | Glossiness [60° incident] | Whiteness [°C] | Ra [µm] | Rpc [cm⁻¹] | Rsk |
| Inventive Example 1 | 60 | 85 | 3.0 | 25 | -0.5 |
| Inventive Example 2 | 55 | 86 | 2.8 | 30 | -0.3 |
| Inventive Example 3 | 46 | 87 | 2.7 | 35 | -0.1 |
| Inventive Example 4 | 43 | 89 | 2.4 | 47 | 0.0 |
| Inventive Example 5 | 32 | 90 | 2.5 | 51 | 0.1 |
| Inventive Example 6 | 27 | 92 | 2.5 | 50 | 0.1 |
| Inventive Example 7 | 34 | 91 | 2.4 | 52 | 0.2 |
| Inventive Example 8 | 28 | 93 | 2.3 | 54 | 0.3 |
| Inventive Example 9 | 25 | 95 | 2.2 | 60 | 0.5 |
| Comparative Example 1 | 254 | 40 | 0.8 | 100 | -0.8 |
| Comparative Example 2 | 232 | 43 | 1.0 | 92 | -0.8 |
| Comparative Example 3 | 221 | 45 | 1.1 | 95 | -0.7 |
| Comparative Example 4 | 185 | 48 | 1.2 | 90 | -0.7 |
| Comparative Example 5 | 120 | 52 | 1.4 | 87 | -0.6 |
| Comparative Example 6 | 117 | 54 | 1.4 | 88 | -0.6 |
| Comparative Example 7 | 113 | 57 | 1.4 | 87 | -0.5 |
| Comparative Example 8 | 105 | 60 | 1.5 | 80 | -0.5 |
| Comparative Example 9 | 101 | 63 | 1.6 | 83 | -0.4 |
| Comparative Example 10 | 99 | 37 | 1.6 | 82 | -0.4 |
| Comparative Example 11 | 98 | 73 | 1.7 | 74 | -0.3 |
| Comparative Example 12 | 76 | 77 | 1.7 | 75 | -0.3 |
| Comparative Example 13 | 74 | 77 | 1.7 | 74 | -0.3 |
| Comparative Example 14 | 68 | 79 | 1.8 | 73 | -0.3 |
| Comparative Example 15 | 66 | 81 | 1.8 | 72 | -0.1 |
| Comparative Example 16 | 61 | 82 | 1.8 | 65 | -0.8 |

Since Comparative Examples 1 to 16 did not satisfy any one or more of the plating compositions and manufacturing conditions defined in the present disclosure, their surface roughness, the number of surface peaks, or skewness was outside of the ranges suggested in the present disclosure, and as a result, the plated steel sheets of Comparative Examples 1 to 16 exhibited poor performance in the surface appearance quality and anti-glare properties. However, since Inventive Examples 1 to 9 satisfied the plating composition and manufacturing conditions defined in the present disclosure, they showed excellent surface appearance quality and anti-glare properties.

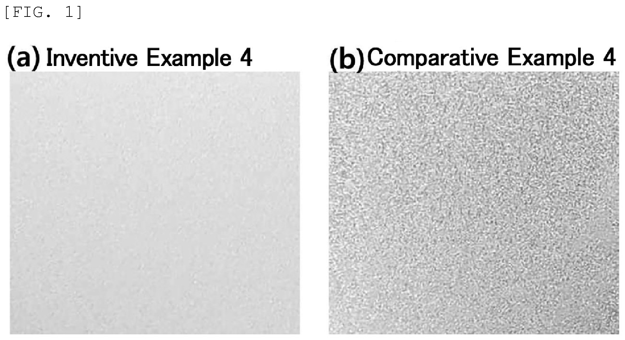

FIG. 1 is image photographs showing surfaces of (a) Inventive Example 4 and (b) Comparative Example 4, respectively. In FIG. 1, it was confirmed that Inventive Example 4 showed higher whiteness than Comparative Example 4, and better aesthetics in the surface quality appearance.

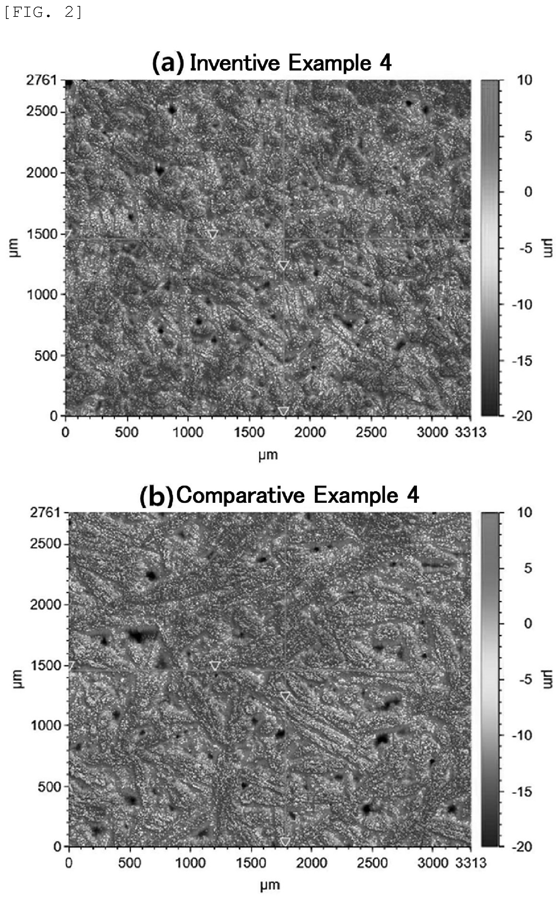

In addition, FIG. 2 shows comparison and evaluation of the surface shape characteristics of (a) Inventive Example 4 and (b) Comparative Example 4. In FIG. 2, it was confirmed that the Comparative Example 4 had lower surface roughness than Inventive Example 4, and as a result, Comparative Example 4 is more likely to cause glare due to the presence of flat portions than Inventive Example 4. In addition, it was confirmed from FIG. 2 that Inventive Example 4 had fewer surface peaks than Comparative Example 4. Therefore, Inventive Example 4 may secure surface quality showing a luxurious white color without gloss.

## Claims

1. A plated steel sheet comprising:
a base steel sheet; and
a Zn-Mg-Al-based plating layer provided on at least one surface of the base steel sheet,
wherein the plating layer includes, by weight: 4.0 to 6.3% of Mg, 11.0 to 19.5% of Al, a remainder of Zn, and other unavoidable impurities, and
a surface of the plated steel sheet satisfies an average roughness Ra of 2.0 to 3.0 µm, a peak count RPc of 25 to 60 (1/10 mm), and a skewness Rsk of -0.5 to 0.5.

2. The plated steel sheet of claim 1, wherein the plated steel sheet has a surface glossiness B of 25 or more and 60 or less and a surface whiteness L of 85 or more.

3. The plated steel sheet of claim 1, wherein the base steel sheet includes, by weight: more than 0% and 0.18% or less of C, more than 0% and 1.5% or less of Si, 0.010 to 2.7% of Mn, more than 0% and 0.0700% or less of P, more than 0% and 0.0150% or less of S, more than 0% and 0.50% or less of Al, more than 0% and 0.060% or less of Nb, more than 0% and 1.1% or less of Cr, more than 0% and 0.060% or less of Ti, and more than 0% and 0.03000% or less of B, with a remainder of Fe and other unavoidable impurities.

4. The plated steel sheet of claim 1, wherein the Zn-Mg-Al-based plating layer further includes, by weight: one or more selected from 0.2% or less (including 0%) of Si and 0.2% or less (including 0%) of Ca.

5. The plated steel sheet of claim 1, wherein the Zn-Mg-Al-based plating layer further includes any one or more of the following groups (a) to (h):
(a) 0.5% or less of Ni,
(b) one or more of 0.1% or less of La, 0.1% or less of Ce, 0.1% or less of Y, and 1.0% or less of Sr,
(c) 0.1% or less of Ti,
(d) 0.5% or less of W,
(e) 2.0% or less of Cu,
(f) one or more of 0.5% or less of Cr, 0.5% or less of Mn, and 0.5% or less of V,
(g) one or more of 0.1% or less of B and 0.1% or less of P,
(h) one or more of 1.0% or less of Sn, 1.0% or less of Sb, and 1.0% or less of Bi.

6. The plated steel sheet of claim 1, wherein the Zn-Mg-Al-based plating layer has a thickness of 5 to 100 µm.

7. A method for manufacturing a plated steel sheet, the method comprising:
preparing a base steel sheet;
dipping the base steel sheet into a hot-dip galvanizing bath to obtain a hot-dip galvanized steel sheet; and
supplying a mixed gas including inert gas and air to the hot-dip galvanized steel sheet and performing wiping,
wherein the air is included at 5 vol% or more and 20 vol% or less with respect to the total volume of the mixed gas,
the hot-dip galvanizing bath includes, by weight: 4.0 to 6.3% of Mg, 11.0 to 19.5% of Al, a remainder of Zn, and other unavoidable impurities, and
in the obtaining of a hot-dip galvanized steel sheet, an entering temperature A of the base steel sheet satisfies the following Relation 1: [Relation 1] $\left({T}_{B}-40\right) ° C \leq A \leq \left({T}_{B}-10\right) ° C$
wherein T_{B} is a temperature (°C) of the galvanizing bath.

8. The method for manufacturing a plated steel sheet of claim 7, wherein the base steel sheet includes, by weight: more than 0% and 0.18% or less of C, more than 0% and 1.5% or less of Si, 0.010 to 2.7% of Mn, more than 0% and 0.0700% or less of P, more than 0% and 0.0150% or less of S, more than 0% and 0.50% or less of Al, more than 0% and 0.060% or less of Nb, more than 0% and 1.1% or less of Cr, more than 0% and 0.060% or less of Ti, and more than 0% and 0.03000% or less of B, with a remainder of Fe and other unavoidable impurities.

9. The method for manufacturing a plated steel sheet of claim 7, wherein the hot-dip galvanizing bath further includes, by weight: one or more selected from 0.2% or less (including 0%) of Si and 0.2% or less (including 0%) of Ca.

10. The method for manufacturing a plated steel sheet of claim 7, wherein the hot-dip galvanizing bath further includes any one or more of the following groups (a) to (h):
(a) 0.5% or less of Ni,
(b) one or more of 0.1% or less of La, 0.1% or less of Ce, 0.1% or less of Y, and 1.0% or less of Sr,
(c) 0.1% or less of Ti,
(d) 0.5% or less of W,
(e) 2.0% or less of Cu,
(f) one or more of 0.5% or less of Cr, 0.5% or less of Mn, and 0.5% or less of V,
(g) one or more of 0.1% or less of B and 0.1% or less of P,
(h) one or more of 1.0% or less of Sn, 1.0% or less of Sb, and 1.0% or less of Bi.

11. The method for manufacturing a plated steel sheet of claim 7, wherein the galvanizing bath has a temperature T_{B} of 440°C or higher and 500°C or lower.

12. The method for manufacturing a plated steel sheet of claim 7, wherein the inert gas includes any one or more of argon gas and nitrogen gas.
